## Europäisches Patentamt
### European Patent Office
### Office européen des brevets

(19)

(11) Veröffentlichungsnummer: **0 111 752**
**B1**

(12) ## EUROPÄISCHE PATENTSCHRIFT

(45) Veröffentlichungstag der Patentschrift:
28.01.87

(51) Int. Cl.⁴: **F 04 B 49/00**

(21) Anmeldenummer: **83111395.6**

(22) Anmeldetag: **15.11.83**

(54) **Steuerung einer Verstellvorrichtung für eine in ihrem Fördervolumen variable hydrostatische Pumpe.**

(30) Priorität: **22.11.82 US 443416**

(43) Veröffentlichungstag der Anmeldung:
**27.06.84 Patentblatt 84/26**

(45) Bekanntmachung des Hinweises auf die Patenterteilung:
**28.01.87 Patentblatt 87/5**

(84) Benannte Vertragsstaaten:
**AT BE CH DE FR GB IT LI NL SE**

(56) Entgegenhaltungen:
**DE - A - 1 811 383**
**DE - A - 2 040 205**
**DE - A - 2 505 778**
**GB - A - 1 312 327**
**GB - A - 1 390 290**
**GB - A - 2 081 394**
**US - A - 4 244 678**
**US - A - 4 248 573**

**SOVIET INVENTIONS ILLUSTRATED, Sektion P,Q;**
**Woche C/19, 18. Juni 1980, DERWENT PUBLICATIONS**
**LTD., London Q 57**

(73) Patentinhaber: **DEERE & COMPANY, 1 John Deere Road,**
**Moline Illinois 61265 (US)**

(72) Erfinder: **Ring, Curtis Phillip, Box 5 Station T, Calgary**
**Alberta T2H 2G7 (CA)**

(74) Vertreter: **Feldmann, Bernhard et al, DEERE &**
**COMPANY European Office, Patent Department**
**Steubenstrasse 36-42 Postfach 503,**
**D-6800 Mannheim 1 (DE)**

**Beschreibung**

Die Erfindung betrifft eine Steuerung einer Verstellvorrichtung für eine in ihrem Fördervolumen variable hydrostatische Pumpe, die mit einem Hydraulikmotor verbunden ist, wobei sich zwischen der hydrostatischen Pumpe und dem Hydraulikmotor Hochdruck- bzw. Niederdruckleitungen erstrecken, denen über eine Ladeleitung Druckflüssigkeit von einer Ladepumpe zuführbar ist, die wahlweise an die Verstellvorrichtung anschliessbar sind und über die abhängig von dem jeweils in ihnen herrschenden Druck ein zwischen sie und die Ladeleitung geschaltetes Ladeventil geöffnet oder geschlossen wird.

Diese bekannte Steuerung (DE-A-2 040 205) ist derart aufgebaut, dass die Ladeleitung über jeweils ein aus zwei Rückschlagventilen bestehendes Ladeventil zu einer Hochdruck- und einer Niederdruckleitung und über diese zu der Verstellvorrichtung führt. Hierzu ist zwischen den Hochdruck- und Niederdruckleitungen parallel zu dem Hydraulikmotor eine Leitung geschaltet, die über eine weitere Leitung mit der Verstellvorrichtung in Verbindung steht und die zwei nur in Richtung auf die weitere Leitung hin öffnende Rückschalgventile aufweist. Die weitere Leitung führt sowohl zu der Verstellvorrichtung wie auch zu einem Druckbegrenzungsventil. Die Druckflüssigkeit passiert auf ihrem Weg zu der Verstellvorrichtung jeweils ein Rückschlagventil, eine der Hochdruck- oder Niederdruckleitungen, ein Rückschlagventil in der parallel zum Hydraulikmotor geschalteten Leitung und die weitere Leitung. Sie strömt dabei jeweils durch das Rückschlagventil, das zu der jeweiligen Niederdruckleitung führt. Ein aus den Rückschlagventilen gebildetes Differenzierventil ermöglicht den Zufluss der unter dem höchsten Druck stehenden Druckflüssigkeit zur Verstellvorrichtung.

Diese Steuerung weist den Nachteil auf, dass im Falle eines Leitungsschadens in der jeweiligen Niederdruckleitung und darauf folgend eines Druckabfalls in der Hochdruckleitung keine Druckflüssigkeit zur Verstellvorrichtung mehr gelangt und die in ihrem Fördervolumen variable Pumpe nicht mehr gesteuert werden kann.

Die der Erfindung zugrunde liegende Aufgabe wird darin gesehen, die Steuerung derart zu verbessern, dass an der Verstellvorrichtung stets Druckflüssigkeit mit einem für eine Verstellung ausreichenden Druck ansteht, so dass bei einem Schaden an der Nieder- oder der Hochdruckleitung die hydrostatische Pumpe noch auf eine Null-Fördermenge gebracht werden kann.

Diese Aufgabe ist erfindungsgemäss dadurch gelöst worden, dass die Ladeleitung zwischen dem Ladeventil und der Ladepumpe mit der Verstellvorrichtung verbindbar ist und dass bei Wegfall der Förderung der hydrostatischen Pumpe der Flüssigkeitsfluss von der Ladepumpe durch das Ladeventil hindurch gedrosselt ist.

Auf diese Weise kann der Druck der Ladeleitung direkt an die Verstellvorrichtung angelegt werden, und eine Beschädigung der Hochdruck- bzw. Niederdruckleitung führt nicht zu einem vollkommenen Druckabfall vor der Verstellvorrichtung, und deren Funktion bleibt stets gewährleistet. Vielmehr wird eine Förderung von Flüssigkeit zur hydrostatischen Pumpe im wesentlichen unterbunden und die von der Ladepumpe gelieferte Flüssigkeit wird mittels des Ladeventils unter Druck gesetzt.

Auf eine einfache Art erfolgt die Beaufschlagung der Verstellvorrichtung mit der unter dem höchsten Druck stehenden Flüssigkeit bei einer Steuerung einer Verstellvorrichtung mit einem Differenzierventil, das einenends mit der Verstellvorrichtung und anderenends mit der Hochdruck- und der Niederdruckleitung in Verbindung steht, und mit Durchlässen in dem Differenzierventil, über die in Abhängigkeit von dem in der Hochdruck- und der Niederdruckleitung anstehenden Druck eine Verbindung zwischen der Verstellvorrichtung einenends und der dem höchsten Flüssigkeitsdruck unterliegenden Leitung anderenends herstellbar ist, dadurch, dass ferner die Ladeleitung anderenends an das Differenzierventil angeschlossen ist.

Der für die Funktion der Verstellvorrichtung erforderliche Druck wird erfindungsgemäss dadurch aufgebaut, dass ein den Druck in der Ladeleitung steuerndes Druckbegrenzungsventil vorgesehen ist, zwischen dem und der hydrostatischen Pumpe sich das Ladeventil befindet, wobei in mindestens einer Stellung des Ladeventils ein Flüssigkeitsfluss von der Ladepumpe zu der hydrostatischen Pumpe zumindest teilweise blokkiert ist und in mindestens einer weiteren Stellung ein ungehinderter Flüssigkeitsfluss von der Ladepumpe zu der hydrostatischen Pumpe möglich ist.

Da die von der Ladepumpe geförderte Flüssigkeitsmenge grösser ist, als zum Ausgleich von Leckagen nötig ist, muss die verbleibende Flüssigkeitsmenge wieder einem Vorratsbehälter zugeführt werden, was jedoch unter Druck erfolgen soll, um Kavitationsfolgen in dem Niederdruckbereich des hydrostatischen Kreislaufes zu vermeiden. Um einer zusätzlichen Erwärmung der Flüssigkeit, bedingt durch das Abströmen unter Druck in den Vorratsbehälter, vorzubeugen, während von der Ladepumpe auch bei Neutralstellung der hydrostatischen Pumpe für die Steuerung ein Druck aufgebaut werden soll, der höher ist als der, den die Ladeflüssigkeit zum Beschicken der hydrostatischen Pumpe aufweisen sollte, ist vorgesehen, dass ein weiteres Druckbegrenzungsventil vorgesehen, parallel zu dem Druckbegrenzungsventil geschaltet und in Abhängigkeit von der Stellung eines Sperrventils mit dem von der Ladepumpe gelieferten Flüssigkeitsdruck beaufschlagbar ist, wobei das weitere Druckbegrenzungsventil bei einem geringeren Flüssigkeitsdruck öffnet als das Druckbegrenzungsventil.

Dabei erfolgt die automatische Steuerung des Druckes über das Sperrventil und das Ladeventil erfindungsgemäss dadurch, dass das Sperrventil und das Ladeventil einenends mit der Hochdruckleitung und anderenends mit der Niederdruckleitung in Verbindung stehen und in Abhängigkeit von dem in der Hochdruck- und der Niederdruckleitung anstehenden Druck in ihre verschiedenen Stellungen bringbar sind, wobei das Sperrventil und das Ladeventil jeweils aus einem Gehäuse mit einer Bohrung bestehen, die in sich einen eine Ringnut aufweisenden Kolben gleitend aufnimmt, und wobei die Anschlüsse der Hochdruck- und der Niederdruckleitung an den den Stirnseiten des Kolbens zugelegenen Enden der Bohrung in diese eintreten. Ein derart aufgebauter Steuerkreis ist aufgrund seiner unkomplizierten Ausbildung im Grunde störunanfällig und erhöht das Leistungsvermögen des hydrostatischen Kreislaufes erheblich.

Eine Steuerung, die entsprechend der Erfindung so ausgebildet ist, dass das Ladeventil über Leitungen mit Öffnungen der hydrostatischen Pumpe verbunden ist, dass die Leitungen in Abhängigkeit von dem Druck in den Öffnungen durch den Kolben verschliessbar sind und dass es in der Neutralstellung der hydrostatischen Pumpe eine Verbindung der Ladepumpe mit den Öffnungen ermöglicht, gewährleistet ein automatisches Zuschalten und Abschalten des von der Ladepumpe aufgebauten Druckes. Ferner wird durch die Herstellung einer Verbindung zwischen der Ladepumpe und den Öffnungen, während sich die hydrostatische Pumpe in ihrer Neutralstellung befindet, die Möglichkeit einer dauernden Flüssigkeitszirkulation durch die hydrostatische Pumpe geschaffen, wodurch stets frische und relativ kühle Flüssigkeit aus dem Vorratsbehälter eine zu starke Erwärmung der hydrostatischen Pumpe unterbindet.

Vorteilhafterweise ist nach einem weiteren Vorschlag gemäss der Erfindung vorgesehen, dass die Ladepumpe und das Ladeventil stromabwärts und das Sperrventil stromaufwärts der hydrostatischen Pumpe vorgesehen sind und dass die Ladeleitung ständig in die Ringnut des Ladeventils mündet und der Kolben zweigeteilt ist.

Um zu vermeiden, dass sich das Ladeventil nicht bereits bei geringsten Druckschwankungen zwischen dem Niederdruck- und dem Hochdruckbereich, die durch äussere Einwirkungen auf den Hydraulikmotor entstehen können, aus seiner Neutralstellung verschiebt, ist nach der Erfindung das Ladeventil so ausgebildet, dass der Kolben des Ladeventils axial zwischen zwei Federn in die Bohrung eingesetzt ist, während ein zu niedriger Druck in der hydrostatischen Pumpe während ihres Betriebes erfindungsgemäss dadurch vermieden wird, dass das Sperrventil zwischen der hydrostatischen Pumpe und dem weiteren Druckbegrenzungsventil vorgesehen ist.

In der Zeichnung ist ein nachfolgend näher beschriebenes Ausführungsbeispiel der Erfindung dargestellt. Es zeigt:

Fig. 1 einen vereinfacht dargestellten Hydraulikkreislauf eines hydrostatischen Antriebssystems und

Fig. 2 das hydrostatische Antriebssystem in gegenständlicher Darstellung.

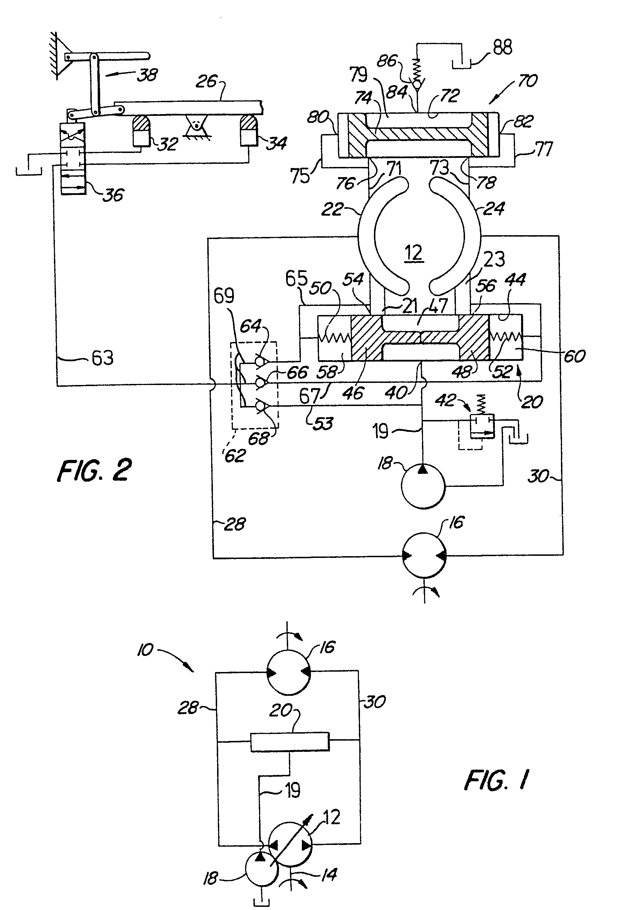

Aus Fig. 1 ist ein genereller Aufbau eines hydrostatischen Kreislaufes eines hydrostatischen Antriebssystems 10 entnehmbar, das eine variable Axialkolbenverdrängerpumpe die als hydrostatische Pumpe 12 bezeichnet wird, enthält und die in Abhängigkeit von einem auf eine Eingangsantriebswelle 14 wirkenden Antriebsmoment dreht und Flüssigkeit sowohl zu als auch von einem Hydraulikmotor 16 weg fördert. Eine Ladepumpe 18 liefert über ein als Sperrventil ausgebildetes Ladeventil 20 unter Druck stehende Flüssigkeit in das hydrostatische Antriebssystem 10, um aufgrund von Leckagen auftretende Flüssigkeitsverluste wieder ausgleichen zu können.

Wie Fig. 2 zu entnehmen ist, weist die hydrostatische Pumpe 12 eine erste und eine zweite Öffnung 22 und 24 auf, die abwechselnd in Abhängigkeit von der Drehrichtung und der Stellung einer Taumelscheibe 26 als Einlass bzw. als Auslass dienen. Die erste und die zweite Öffnung 22 und 24 geben durch eine Hochdruckleitung 28 und durch eine Niederdruckleitung 30 unter Druck stehende Flüssigkeit zu dem Hydraulikmotor 16 und holen rückfliessende Flüssigkeit von diesem. Die Hochruck- bzw. Niederdruckleitung 28 bzw. 30 nehmen daher wechselweise die Funktion einer Hochdruck- oder einer Niederdruckleitung ein. Die Stellung der Taumelscheibe 26 wird über zwei Servokolben 32 und 34 gesteuert, die über ein Steuerventil 36, das mit einem handbetätigbaren Gestänge 38 verbunden ist, mit Flüssigkeit versorgt werden. Die Taumelscheibe 26, die Servokolben 32, 34 und das Steuerventil 36 bilden demnach die Verstellvorrichtung der hydrostatischen Pumpe 12.

Die Ladepumpe 18 führt unter Druck stehende Ladeflüssigkeit über eine Ladeleitung 19 einer Einlassöffnung 40 im Ladeventil 20 zu, wobei die Ladeflüssigkeit nur bis zu einem bestimmten Grenzwert, beispielsweise 18 bar, unter Druck gesetzt werden kann, da ansonsten ein mit der Ladeleitung 19 verbundenes Druckbegrenzungsventil 42 öffnet. Das Ladeventil 20 ist mit einer Bohrung 44 versehen, die in sich ein Paar Kolben 46 und 48 gleitend aufnimmt. Wenn sich die Taumelscheibe 26, die in Fig. 2 der Übersichtlichkeit wegen getrennt von der hydrostatischen Pumpe 12 gezeichnet ist, in einer Neutralstellung befindet und der Druck in der Hochdruck- bzw. Niederdruckleitung 28 bzw. 30 ausgeglichen ist, drängen zwei Federn 50 und 52 die beiden Kolben 46 und 48 gemeinsam in eine Neutralstellung, wie dies ebenfalls Fig. 2 entnommen werden kann, und in der sie gemeinsam zwischen sich eine Ringnut 47 definieren. Dies führt jedoch zu einer Drosselung des Flüssigkeitsflusses an den Ventilausgängen 54 und 56, die in dem Ladeventil 20 vorgesehen und mit den Öffnungen 22, 24 über Kanäle oder Leitungen 21, 23 verbunden sind, weshalb sich in der ersten und zweiten Öffnung 22 und 24 ein geringerer Druck aufbaut als in einer ausgangsseitig der Ladepumpe 18 angeordneten und mit der Ladeleitung 19 verbundenen Leitung 53. Der Kolben 46 ist in Abhängigkeit von dem sich in einer in dem Ladeventil 20 einenends vorgesehenen Kammer 58, die mit der Hochdruckleitung 28 über die erste Öffnung 22 in Verbindung steht, aufbauenden Druck bewegbar. Hingegen ist der Kolben 48 in Abhängigkeit von einem sich in einer über die zweite Öffnung 24 mit der Niederdruckleitung 30 verbundenen Kammer 60 anderenends des Ladeventils 20 aufbauenden Druck verschiebbar.

Wenn sich der Kolben 46 auf den Druck in der Kammer 58 hin bewegt, drückt es den Kolben 48 gegen die diesem zugeordnete Feder 52, reduziert damit die Drosselung des Flüssigkeitsflusses an dem Ventilausgang 56 und blockiert den Ventilausgang 54 vollkommen. Wenn der Kolben 48 auf diese Weise vollkommen verschoben worden ist, entfällt die Drosselung an dem Ventilausgang 56, und der Druck ausgangsseitig der Ladepumpe 18 ist demzufolge der gleiche wie der Ladedruck an der zweiten Öffnung 24. Aufgrund der symmetrischen Ausbildung des Ladeventils 20 laufen die vorbeschriebenen Vorgänge in analoger Weise ab, wenn die zweite Öffnung 24 mit hohem Druck und die erste Öffnung 22 mit dem Ladedruck beaufschlagt wird.

Ein Differenzierventil 62 in Form einer dreifachen Rückschlagventileinheit, die über eine Leitung 63 mit dem Steuerventil 36 verbunden ist, enthält ein erstes Rückschlagventil 64, das in einer Richtung einen Flüssigkeitsstrom von Hochdruckleitung 28 und der ersten Öffnung 22 zu dem Steuerventil 36 ermöglicht, ein zweites Rückschlagventil 66, das in der gleichen Richtung einen Flüssigkeitsstrom von der Niederdruckleitung 30 und der zweiten Öffnung 24 zu dem Steuerventil 36 zulässt, und ein drittes Rückschlagventil 68, das wieder in derselben Richtung einen Flüssigkeitsstrom von der Ladepumpe 18 zu dem Steuerventil 36 zulässt. Hierzu erstreckt sich zwischen der mit der ersten Öffnung 22 verbundenen Leitung 21 und dem ersten Rückschlagventil 64 eine Leitung 65, zwischen der mit der zweiten Öffnung 24 verbundenen Leitung 23 und dem zweiten Rückschlagventil 66 eine Leitung 67 und zwischen der der Ladeleitung 19 und dem dritten Rückschlagventil 68 die Leitung 53. Auf der anderen Seite der Rückschlagventile 64, 66, 68 schliesst jeweils ein Abzweig oder Durchlass 69 der Leitung 63 an und verbindet somit alle drei Rückschlagventile 64, 66, 68. Demnach wird durch eines der Rückschlagventile 64, 66 oder 68 die Flüssigkeit mit dem höchsten Druck hindurchströmen und die verbleibenden zwei Rückschlagventile in ihrer schliessenden Stellung halten. Von dem Differenzierventil 62 wird der höchste in der Hochdruck- oder der Niederdruckleitung 28 oder 30 anstehende Druck oder der Ladedruck dem Steuerventil 36 zugeleitet, um die Servokolben 32 und 34 zu bedienen.

Dieses hydrostatische Antriebssystem 10 ist mit einem eine Druckregelvorrichtung bildenden Sperrventil 70 zum Steuern des Druckes in der gerade die Rückflussleitung darstellenden Hochdruck- oder Niederdruckleitung 28 oder 30 auf einen maximalen Druck, und zwar 10 bar, der damit jedoch geringer ist als der von der Ladepumpe 18 aufgebaute Druck, ausgerüstet. Das Sperrventil 70 weist eine Bohrung 72 auf, die einen als Pendelventilelement ausgebildeten Kolben 74 mit einer Ringnut 79 gleitend in sich aufnimmt. Es sind darin ferner Einlassöffnungen 76 und 78, die eine Verbindung der Bohrung 72 mit der ersten bzw. zweiten Öffnung 22 bzw. 24 über Kanäle 71, 73 herstellen, und Steueröffnungen 80 und 82 vorgesehen, die die Enden der Bohrung 72 mit der ersten bzw. der zweiten Öffnung 22 bzw. 24 über Leitungen 75, 77, die an die Kanäle 71, 73 anschliessen, verbinden. Schliesslich verbindet ein Ausgang 84 die Bohrung 72 über ein weiteres Druckbegrenzungsventil 86 mit einem Vorratsbehälter 88.

Zusammenfassend stellt sich die Funktion der Steuerung der Verstellvorrichtung des hydrostatischen Antriebssystems wie folgt dar.

Ausgehend davon, dass sich die hydrostatische Pumpe 12 in ihrer Neutralstellung befindet, herrscht in der ersten und zweiten Öffnung 22 und 24 der gleiche Druck, und der Kolben 46 wie der Kolben 74 befinden sich in ihrer jeweiligen Neutralstellung, so dass von der Ladepumpe 18 geförderte Flüssigkeit durch das fast vollkommene Verschliessen der Ventilausgänge 54, 56 mittels der Kolben 46, 48 nur zu einem geringen Teil das Ladeventil 20 durchströmen kann und auf den an dem Druckbegrenzungsventil 42 eingestellten Druck gebracht wird. Dieser gegenüber dem Druck in der Hochdruck- oder Niederdruckleitung 28 oder 30 höhere Druck pflanzt sich durch die Leitung 53 bis zu dem dritten Rückschlagventil 68 fort, öffnet dieses und beaufschlagt das erste und das zweite Rückschlagventil 66, 68 derart, dass ein Flüssigkeitsfluss aus der oder in die erste und zweite Öffnung 22, 24 nicht erfolgen kann. Über die Leitung 63 steht dieser Flüssigkeitsdruck auch an dem Steuerventil 36 an, das einen Flüssigkeitsfluss zu einem der Servokolben 32, 34 jedoch so lange nicht zulässt, wie es sich ebenfalls in seiner Neutralstellung befindet, in der es alle Verbindungen zu und von den Servokolben 32, 34 unterbricht.

Soll nun die hydrostatische Pumpe 12 ein Antriebsmoment entwickeln, dann ist hierzu über das handbetätigbare Gestänge 38 das Steuerventil 36 aus seiner Neutralstellung in eine einen Flüssigkeitsfluss zu dem Servokolben 32 oder 34 und von dem Servokolben 34 oder 32 fort ermöglichende Stellung zu bringen. Die durch das dritte Rückschlagventil 68 hindurchfliessende und von der Ladepumpe 18 gegen den Widerstand des Druckregelventils 42 geförderte Flüssigkeit verschwenkt danach über den betreffenden Servokolben 32 oder 34 die Taumelscheibe 26. Hat die Taumelscheibe 26 die gewünschte Neigung erreicht, dann wird das Steuerventil 36 mittels einer in dem Gestänge 38 integrierten Rückführung wieder in seine Neutralstellung gebracht. Gleichzeitig zu dem Neigen der Taumelscheibe 26 beginnt die hydrostatische Pumpe 12 in einer der Öffnungen 22, 24 einen Arbeitsdruck zu erzeugen, der abhängig ist von der Belastung des Hydraulikmotors 16, der aber, solange der Hydraulikmotor 16 einen Bewegungswiderstand erfährt, stets grösser ist als der Ladedruck. Es wird im folgenden angenommen, dass die hydrostatische Pumpe 12 Flüssigkeit aus der Öffnung 24 und der Niederdruckleitung 30 ansaugt und zu der Öffnung 22 und der Hochdruckleitung 28 pumpt. Somit steht in der ersten Öffnung 22, der Leitung 21, der Leitung 65 und in der Kammer 58 hoher Druck an, während in der zweiten Öffnung 24, der Niederdruckleitung 30, der Leitung 23, der Leitung 67 und in der Kammer 60 nur ein geringer Rückströmdruck herrscht. Demgemäss verschieben sich die Kolben 46, 48 derart, dass die von der Ladepumpe 18 kommende Flüssigkeit der Leitung 23 und der Öffnung 24 ungehindert zugeführt wird, während der Kolben 46 den Ventilausgang 54 vollkommen verschliesst und ein Einströmen von Druckflüssigkeit aus der ersten Öffnung 22 in das Ladeventil 20 verhindert. Gleichzeitig wird das erste Rückschlagventil 64 geöffnet, und die unter hohem Druck stehende Flüssigkeit hält das zweite Rückschlagventil 66 in seiner geschlossenen Stellung, bringt das dritte Rückschlagventil 68 aus seiner zuvor durch den Ladedruck geöffneten Stellung ebenfalls in seine schliessende Stellung und fliesst bis zu dem Steuerventil 36, um bei Bedarf die Servokolben 32, 34 verstellen zu können. Über den Kanal 71 und die Leitung 75 gelangt ebenfalls unter hohem Druck stehende Flüssigkeit zu der Steueröffnung 80 und bewirkt, dass der Kolben 74 in eine die Einlassöffnung 76 schliessende und die Einlassöffnung 78 öffnende Stellung gebracht wird. Die von der Ladepumpe 18 kommende Flüssigkeit gelangt über die Ladeleitung 19, das Ladeventil 20, die Leitung 23, die zweite Öffnung 24, den Kanal 73, die Bohrung 72 und den Ausgang 84 zu dem weiteren Druckbegrenzungsventil 86, das sie gegen den von diesem aufgebauten Widerstand öffnet, und fliesst zu dem Vorratsbehälter 88.

Normalerweise, d.h. bei sich nicht in Neutralstellung befindlicher Taumelscheibe 26, wird der Druck in derjenigen der Hochdruck- oder Niederdruckleitungen 28 oder 30 mit dem hohen Systemdruck höher als der von der Ladepumpe 18 aufgebaute Ladedruck und höher als der Rückströmdruck in der anderen der Hochdruck- oder Niederdruckleitungen 28 oder 30 sein. In diesem Falle wird eines der Rückschlagventile 64 und 66 diesen höheren Systemdruck dem Steuerventil 36 zuleiten und somit stets für einen Steuerdruck sorgen, der ausreicht, um die Servokolben 32 und 34 zu betätigen.

Sollte jedoch die hydrostatische Pumpe 12 die Flüssigkeit einem Hydraulikmotor 16 zuführen, der überlaufen wird, d.h. der kein Antriebsmoment mehr überträgt, oder befindet sich die Taumelscheibe 26 in ihrer Neutralstellung, so dass keine oder nur sehr wenig Flüssigkeit zwischen der hydrostatischen Pumpe 12 und dem Hydraulikmotor 16 fliesst, dann wäre der Flüssigkeitsdruck in beiden Hochdruck- oder Niederdruckleitungen 28 und 30 geringer als der Ladedruck und somit nicht ausreichend zum Betätigen der Servokolben 32 und 34. In diesem Falle wird das dritte Rückschlagventil 68 den höheren Ladedruck, der von der Ladepumpe 18 aufgebaut wird, dem Steuerventil 36 zuleiten, so dass dort ein genügend hoher Druck zum Einstellen der Stellung der Taumelscheibe 26 während einer derartigen Neutralstellung oder einem Überholvorgang vorhanden ist.

**Patentansprüche**

1. Steuerung einer Verstellvorrichtung (26, 32, 34, 36) für eine in ihrem Fördervolumen variable hydrostatische Pumpe (12), die mit einem Hydraulikmotor (16) verbunden ist, wobei sich zwischen der hydrostatischen Pumpe (12) und dem Hydraulikmotor (16) Hochdruck- bzw. Niederdruckleitungen (28 bzw. 30) erstrecken, denen über eine Ladeleitung (19) Druckflüssigkeit von einer Ladepumpe (18) zuführbar ist, die wahlweise an die Verstellvorrichtung (26, 32, 34, 36) anschliessbar sind und über die abhängig von dem jeweils in ihnen herrschenden Druck ein zwischen sie und die Ladeleitung (19) geschaltetes Ladeventil (20) geöffnet oder geschlossen wird, dadurch gekennzeichnet, dass die Ladeleitung (19) zwischen dem Ladeventil (20) und der Ladepumpe (18) mit der Verstellvorrichtung (26, 32, 34, 36) verbindbar ist und dass bei Wegfall der Förderung der hydrostatischen Pumpe (12) der Flüssigkeitsfluss von der Ladepumpe (18) durch das Ladeventil (20) hindurch gedrosselt ist.

2. Steuerung einer Verstellvorrichtung (26, 32, 34, 36) nach Anspruch 1 mit einem Differenzierventil (62), das einenends mit der Verstellvorrichtung (26, 32, 34, 36) und anderenends mit der Hochdruck- und der Niederdruckleitung (28 und 30) in Verbindung steht, und mit Durchlässen (69) in dem Differenzierventil (62), über die in Abhängigkeit von dem in der Hochdruck- und der Niederdruckleitung (28 und 30) anstehenden Druck eine Verbindung zwischen der Verstellvorrichtung (26, 32, 34, 36) einenends und der dem höchsten Flüssigkeitsdruck unterliegenden Hochdruck- oder Niederdruckleitung (28, 30) anderenends herstellbar ist, dadurch gekennzeichnet, dass ferner die Ladeleitung (19) anderenends an das Differenzierventil (62) angeschlossen ist.

3. Steuerung einer Verstellvorrichtung (26, 32, 34, 36) nach Anspruch 1 oder 2, dadurch gekennzeichnet, dass ein den Druck in der Ladeleitung (19) steuerndes Druckbegrenzungsventil (42) vorgesehen ist, zwischen dem und der hydrostatischen Pumpe (12) sich das Ladeventil (20) befindet, wobei in mindestens einer Stellung des Ladeventils (20) ein Flüssigkeitsfluss von der Ladepumpe (18) zu der hydrostatischen Pumpe (12) zumindest teilweise blockiert ist und in mindestens einer weiteren Stellung ein ungehinderter Flüssigkeitsfluss von der Ladepumpe (18) zu der hydrostatischen Pumpe (12) möglich ist.

4. Steuerung einer Verstellvorrichtung (26, 32, 34, 36) nach Anspruch 3, dadurch gekennzeichnet, dass ein weiteres Druckbegrenzungsventil (86) vorgesehen, parallel zu dem Druckbegrenzungsventil (42) geschaltet und in Abhängigkeit von der Stellung eines Sperrventils (70) mit dem von der Ladepumpe (18) gelieferten Flüssigkeitsdruck beaufschlagbar ist, wobei das weitere Druckbegrenzungsventil (86) bei einem geringeren Flüssigkeitsdruck öffnet als das Druckbegrenzungsventil (42).

5. Steuerung einer Verstellvorrichtung (26, 32, 34, 36) nach einem oder mehreren der vorherigen Ansprüche, dadurch gekennzeichnet, dass das Sperrventil (70) und das Ladeventil (20) einenends mit der Hochdruckleitung (28, 30) und anderenends mit der Niederdruckleitung (30, 28) in Verbindung stehen und in Abhängigkeit von dem in der Hochdruck- und der Niederdruckleitung (28, 30) anstehenden Druck in ihre verschiedenen Stellungen bringbar sind.

6. Steuerung einer Verstellvorrichtung (26, 32, 34, 36) nach einem oder mehreren der vorherigen Ansprüche, dadurch gekennzeichnet, dass das Sperrventil (70) und das Ladeventil (20) jeweils aus einem Gehäuse mit einer Bohrung (44, 72) bestehen, die in sich einen eine Ringnut (47, 79) aufweisenden Kolben (46, 48, 74) gleitend aufnimmt, und dass die Anschlüsse der Hochdruck- und der Niederdruckleitung (28 und 30) an den den Stirnseiten des Kolbens (46, 48, 74) zugelegenen Enden der Bohrung (44, 72) in diese eintreten.

7. Steuerung einer Verstellvorrichtung (26, 32, 34, 36) nach einem oder mehreren der vorherigen Ansprüche, dadurch gekennzeichnet, dass das Ladeventil (20) über Leitungen (21, 23) mit Öffnungen (22, 24) der hydrostatischen Pumpe (12) verbunden ist, dass die Leitungen (21, 23) in Abhängigkeit von dem Druck in den Öffnungen (22, 24) durch den Kolben (46, 48) verschliessbar sind und dass es in der Neutralstellung der hydrostatischen Pumpe (12) eine Verbindung der Ladepumpe (18) mit den Öffnungen (22, 24) ermöglicht.

8. Steuerung einer Verstellvorrichtung (26, 32, 34, 36) nach einem oder mehreren der vorherigen Ansprüche, dadurch gekennzeichnet, dass die Ladepumpe (18) und das Ladeventil (20) stromabwärts und das Sperrventil (70) stromaufwärts der hydrostatischen Pumpe (12) vorgesehen sind.

9. Steuerung einer Verstellvorrichtung (26, 32, 34, 36) nach einem oder mehreren der vorherigen Ansprüche, dadurch gekennzeichnet, dass die Ladeleitung (19) ständig in die Ringnut (47) des Ladeventils (20) mündet und der Kolben (46, 48) zweigeteilt ist.

10. Steuerung einer Verstellvorrichtung (26, 32, 34, 36) nach einem oder mehreren der vorherigen Ansprüche, dadurch gekennzeichnet, dass der Kolben (46, 48) des Ladeventils (20) axial zwischen zwei Federn (50, 52) in die Bohrung (44) eingesetzt ist.

11. Steuerung einer Verstellvorrichtung (26, 32, 34, 36) nach einem oder mehreren der vorherigen Ansprüche, dadurch gekennzeichnet, dass das Sperrventil (70) zwischen der hydrostatischen Pumpe (12) und dem weiteren Druckbegrenzungsventil (86) vorgesehen ist.

## Revendications

1. Système de commande d'un dispositif de réglage (26, 32, 34, 36) pour une pompe hydrostatique (12) à débit volumétrique variable reliée à un moteur hydraulique (16), des conduites à haute pression, respectivement à basse pression (28, respectivement 30) s'étendant entre la pompe hydrostatique (12) et le moteur hydraulique (16), conduites auxquelles une pompe de charge (18) peut transmettre du liquide sous pression par une conduite de charge (19) et qui peuvent être reliées sélectivement au dispositif de réglage (26, 32, 34, 36) et par l'intermédiaire desquelles, en fonction de la pression qui règne dans chacune d'elles, une soupape de charge (20) montée entre elles et la conduite de charge (19), peut s'ouvrir ou se fermer, caractérisé en ce que la conduite de charge (19) entre la soupape de charge (20) et la pompe de charge (18) peut être reliée au dispositif de réglage (26, 32, 34, 36), et en ce qu'en cas d'absence de débit de la pompe hydrostatique (12), l'écoulement de liquide en provenance de la pompe de charge (18) passant par la soupape de charge (20) est étranglé.

2. Système de commande d'un dispositif de réglage (26, 32, 34, 36) selon la revendication 1 comportant une soupape différenciatrice (62) qui est en liaison à une extrémité avec le dispositif de réglage (26, 32, 34, 36) et, à l'autre extrémité, avec la conduite à haute pression et la conduite à basse pression (28 et 30), et des passages (69) dans la soupape différenciatrice (62) par l'intermédiaire desquels, en fonction de la pression régnant dans la conduite à haute pression et la conduite à basse pression (28 et 30), une liaison entre le dispositif de réglage (26, 32, 34, 36) à une extrémité et la conduite à haute pression ou la conduite à basse pression soumise à la pression de liquide la plus élevée (28, 30) à l'autre extrémité, peut être établie, caractérisé en ce qu'en outre la conduite de charge (19) est reliée, à l'autre extrémité, à la soupape différenciatrice (62).

3. Système de commande d'un dispositif de réglage (26, 32, 34, 36) selon la revendication 1 ou 2, caractérisé en ce qu'une soupape de limitation de pression (42) commandant la pression dans la conduite de charge (19) est prévue, entre laquelle soupape et la pompe hydrostatique (12) se trouve la soupape de charge (20), un écoulement de liquide de la pompe de charge (18) à la pompe hydrostatique (12) étant bloqué au moins partiellement dans au moins une position de la soupape de charge (20) et un écoulement de liquide sans obstacle de la pompe de charge (18) à la pompe hydrostatique (12) étant possible dans au moins une autre position.

4. Système de commande d'un dispositif de réglage (26, 32, 34, 36) selon la revendication 3, caractérisé en ce qu'une autre soupape de limitation de pression (86) est prévue, montée en parallèle sur la soupape de limitation de pression (42), et peut recevoir en fonction de la position d'une soupape d'arrêt (70) la pression de liquide fournie par la pompe de charge (18), l'autre soupape de limitation de pression (86) s'ouvrant pour une plus faible pression de liquide que la soupape de limitation de pression (42).

5. Système de commande d'un dispositif de réglage (26, 32, 34, 36) selon une ou plusieurs des revendications précédentes, caractérisé en ce que la soupape d'arrêt (70) et la soupape de charge (20) sont en liaison, à une extrémité, avec la conduite à haute pression (28, 30) et, à l'autre extrémité, avec la conduite à basse pression (30, 28) et peuvent être amenées dans différentes positions en fonction de la pression régnant dans la conduite à haute pression et la conduite à basse pression (28, 30).

6. Système de commande d'un dispositif de réglage (26, 32, 34, 36) selon une ou plusieurs des revendications précédentes, caractérisé en ce que la soupape d'arrêt (70) et la soupape de charge (20) comprennent chacune un corps comportant un alésage (44, 72) qui reçoit en son intérieur de façon qu'il puisse coulisser un piston (46, 48, 74) comportant une rainure annulaire (47, 79), et en ce que les raccords de la conduite à haute pression et de la conduite à basse pression (28 et 30) pénètrent dans l'alésage (44, 72) aux extrémités de cet alésage orientées vers les faces frontales du piston (46, 48, 74).

7. Système de commande d'un dispositif de réglage (26, 32, 34, 36) selon une ou plusieurs des revendications précédentes, caractérisé en ce que la soupape de charge (20) est reliée par des conduites (21, 23) à des orifices (22, 24) de la pompe hydrostatique (12), en ce que les conduites (21, 23) peuvent être fermées en fonction de la pression régnant dans les orifices (22, 24) par le piston (46, 48), et en ce qu'elle permet, dans la position neutre de la pompe hydrostatique (12), une liaison de la pompe de charge (18) avec les orifices (22, 24).

8. Système de commande d'un dispositif de réglage (26, 32, 34, 36) selon une ou plusieurs des revendications précédentes, caractérisé en ce que la pompe de charge (18) et la soupape de charge (20) sont prévues en aval et la soupape d'arrêt (70) en amont de la pompe hydrostatique (12).

9. Système de commande d'un dispositif de réglage (26, 32, 34, 36) selon une ou plusieurs des revendications précédentes, caractérisé en ce que la conduite de charge (19) débouche en permanence dans la rainure annulaire (47) de la soupape de charge (20) et en ce que le piston (46, 48) est en deux parties.

10. Système de commande d'un dispositif de réglage (26, 32, 34, 36) selon une ou plusieurs des revendications précédentes, caractérisé en ce que le piston (46, 48) de la soupape de charge (20) est introduit axialement dans l'alésage (44) entre deux ressorts (50, 52).

11. Système de commande d'un dispositif de réglage (26, 32, 34, 36) selon une ou plusieurs des revendications précédentes, caractérisé en ce que la soupape d'arrêt (70) est prévue entre la pompe hydrostatique (12) et l'autre soupape de limitation de pression (86).

## Claims

1. A control arrangement for an adjusting means (26, 32, 34, 36) for a hydrostatic pump (12) of variable delivery volume, which is connected to a hydraulic motor (16), wherein extending between the hydrostatic pump (12) and the hydraulic motor (16) are high-pressure and low-pressure lines (28 and 30 respectively) to which pressure fluid can be supplied by a charging pump (18) by way of a charging line (19), which can be selectively connected to the adjusting means (26, 32, 34, 36) and by way of which a charging valve (20) connected between them and the charging line (19) is opened or closed in dependence on the pressure respectively obtaining in said lines (28 and 30), characterised in that the charging line (19) can be connected between the charging valve (20) and the charging pump (18) to the adjusting means (26, 32, 34, 36) and that in the event of the delivery of the hydrostatic pump (12) ceasing, the flow of fluid from the charging pump (18) is throttled through the charging valve (20).

2. A control arrangement for an adjusting means (26, 32, 34, 36) according to claim 1, comprising a differentiating valve (62) wich communicates on the one hand with the adjusting means (26, 32, 34, 36) and on the other hand with the high-pressure and the low-pressure lines (28 and 30), and comprising passages (69) in the differentiating valve (62) by way of which, in dependence on the pressure obtaining in the high-pressure and low-pressure lines (28 and 30), a communication can be made between the adjusting means (26, 32, 34, 36) on the one hand and the high-pressure or low-pressure line (28, 30) which is subjected to the highest fluid pressure, on the other hand, characterised in that in addition the charging line (19) is connected on the other hand to the differentiating valve (62).

3. A control arrangement for an adjusting means (26, 32, 34, 36) according to claim 1 or claim 2 characterised in that there is provided a pressure limiting valve (42) for controlling the pressure in the charging line (19), the charging valve (20) being disposed between the pressure limiting valve (42) and the hydrostatic pump (12), wherein in at least one position of the charging valve (20) a flow of fluid from the charging pump (18) to the hydrostatic pump (12) is at least partially blocked and in at least one further position an unimpeded flow of fluid is possible from the charging pump (18) to the hydrostatic pump (12).

4. A control arrangement for an adjusting means (26, 32, 34, 36) according to claim 3 characterised in that there is provided a further pressure limiting valve (86) which is connected in parallel with the pressure limiting valve (42) and which can be acted upon by the fluid pressure supplied by the charging pump (18), in dependence on the position of a stop valve (70), wherein the further pressure limiting valve (86) opens at a lower fluid pressure than the pressure limiting valve (42).

5. A control arrangement for an adjusting means (26, 32, 34, 36) according to one or more of the preceding claims characterised in that the stop valve (70) and the charging valve (20) communicate on the one hand with the high-pressure line (28, 30) and on the other hand with the low-pressure line (30, 28) and can be put into their various positions in dependence on the pressure obtaining in the high-pressure and low-pressure lines (28, 30).

6. A control arrangement for an adjusting means (26, 32, 34, 36) according to one or more of the preceding claims characterised in that the stop valve (70) and the charging valve (20) each comprise a housing having a bore (44, 72) which slidably accommodates a spool (46, 48, 74) having an annular groove (47, 79), and that the connections of the high-pressure and low-pressure lines (28 and 30) pass into the bore (44, 72) at the ends thereof which are towards the ends of the spool (46, 48, 74).

7. A control arrangement for an adjusting means (26, 32, 34, 36) according to one or more of the preceding claims characterised in that the charging valve (20) is connected by way of lines (21, 23) to ports (22, 24) of the hydrostatic pump (12), that the lines (21, 23) can be closed by the spool (46, 48) in dependence on the pressure in the ports (22, 24) and that in the neutral position of the hydrostatic pump (12) the charging pump (18) can be connected to the ports (22, 24).

8. A control arrangement for an adjusting means (26, 32, 34, 36) according to one or more of the preceding claims characterised in that the charging pump (18) and the charging valve (20) are disposed downstream of the hydrostatic pump (12) and the stop valve (70) is disposed upstream of the hydrostatic pump (12).

9. A control arrangement for an adjusting means (26, 32, 34, 36) according to one or more of the preceding claims characterised in that the charging line (19) constantly communicates with the annular groove (47) of the charging valve (20) and the spool (46, 48) is divided into two.

10. A control arrangement for an adjusting means (26, 32, 34, 36) according to one or more of the preceding claims characterised in that the spool (46, 48) of the charging valve (20) is fitted into the bore (44) axially between two springs (50, 52).

11. A control arrangement for an adjusting means (26, 32, 34, 36) according to one or more of the preceding claims characterised in that the stop valve (70) is provided between the hydrostatic pump (12) and the further pressure limiting valve (86).

0 111 752

FIG. 2

FIG. 1